# FASCICULE DE BREVET EUROPEEN

(11) **EP 2 952 979 B1**
(45) Date de publication et mention de la délivrance du brevet: **01.03.2017**
(21) Numéro de dépôt: 15167528.7
(22) Date de dépôt: 13.05.2015
(51) Int. Cl.: G04D 3/00, G04B 1/14, G04B 31/004

(54) **COMPOSANT HORLOGER À BASE DE VERRE PHOTOSTRUCTURABLE**
UHRKOMPONENTE AUS FOTOSTRUKTURIERBAREM GLAS
TIMEPIECE COMPONENT MADE OF PHOTOSTRUCTURABLE GLASS

(30) Priorité: 03.06.2014 EP 14171008
(43) Date de publication de la demande: 09.12.2015
(73) Titulaire: Nivarox-FAR S.A., 2400 Le Locle (CH)
(72) Inventeur: Dubois, Philippe, 2074 Marin (CH); Hessler, Thierry, 2024 St-Aubin (CH); Charbon, Christian, 2054 Chézard-St-Martin (CH)
(74) Mandataire: Goulette, Ludivine

(56) Documents cités:
- EP-A1- 1 791 039
- EP-A1- 2 060 534
- EP-A1- 2 145 857
- US-B1- 6 710 540
- BECKER H ET AL: "Chemical analysis in photostructurable glass chips", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 86, no. 2-3, 20 septembre 2002 (2002-09-20), pages 271-279, XP004380201, ISSN: 0925-4005, DOI: 10.1016/S0925-4005(02)00162-4

## Description

### Domaine de l'invention

L'invention se rapporte à un composant horloger à base de verre photostructurable et notamment un tel composant comportant au moins une pièce à base de verre photostructurable et au moins une autre pièce à base de silicium, de métal ou de céramique.

### Arrière-plan de l'invention

Dans le domaine horloger, une part croissante des composants horlogers sont formés à l'aide de matériaux fragiles comme ceux à base de silicium ou de céramique. On peut, à titre d'exemple, envisager de former le spiral, le balancier ou l'ancre.

La demande EP 1 791 039 divulgue un composant horloger à base de verre photo-structuré et son procédé de fabrication.

Toutefois, les techniques de gravage de ces matériaux fragiles limitent les possibilités quant aux formes possibles des composants.

### Résumé de l'invention

Le but de la présente invention est de pallier tout ou partie les inconvénients cités précédemment en proposant un composant horloger qui est moins limité quant à sa forme tout en ayant la possibilité de toujours utiliser des parties à base de silicium ou de céramique.

A cet effet, l'invention se rapporte à un composant horloger comportant une première pièce à base de verre photostructurable, au moins une deuxième pièce à base d'au moins un deuxième matériau caractérisé en ce qu'une surface de la première pièce est solidarisée sur une surface de la deuxième pièce afin de former un composant horloger monobloc.

Avantageusement selon l'invention, on comprend que le composant horloger est du type composite, c'est-à-dire formé de verre photostructurable et d'au moins un autre matériau. On comprend donc que des formes particulières peuvent être obtenues par la pièce en verre photostructurable tout en gardant un élément fonctionnel à base de silicium, de métal ou de céramique.

Conformément à d'autres variantes avantageuses de l'invention :
- ledit au moins un deuxième matériau est à base de silicium et comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium ;
- ledit au moins un deuxième matériau est à base de céramique et comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore ;
- ledit au moins un deuxième matériau est à base de métal et comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages ;
- ledit au moins un deuxième matériau comporte en outre au moins un revêtement partiel d'oxyde de silicium, de nitrure de silicium, de carbure de silicium ou d'un allotrope du carbone ;
- la première pièce et/ou la deuxième pièce forme est un spiral, une cheville, un balancier, un axe, un plateau, une ancre comme une tige, une baguette, une fourchette, une palette et un dard, un mobile comme une roue, un arbre et un pignon, un pont, une platine, une masse oscillante, une tige de remontoir, un palier, un coussinet, une denture de chant ou une colonne.

L'invention se rapporte à une pièce d'horlogerie caractérisée en ce qu'elle comporte un composant horloger selon l'une des variantes précédentes.

En outre, selon un premier mode de réalisation, l'invention se rapporte à un procédé de fabrication d'un composant horloger monobloc comportant les étapes suivantes :
a) se munir d'une première plaquette à base de verre photostructurable comportant un premier motif gravé ;
b) se munir d'au moins une deuxième plaquette en au moins un deuxième matériau comportant au moins un deuxième motif gravé ;
c) solidariser la première plaquette à ladite au moins une deuxième plaquette pour réaliser un substrat et, par superposition desdits motifs, former un composant horloger monobloc comportant une première épaisseur à base de verre photostructurable et au moins une deuxième épaisseur dudit au moins un deuxième matériau ;
d) libérer du substrat le composant horloger monobloc.

Selon un deuxième mode de réalisation, l'invention se rapporte à un procédé de fabrication d'un composant horloger monobloc comportant les étapes suivantes :
e) solidariser une première plaquette à base de verre photostructurable à au moins une deuxième plaquette en au moins un deuxième matériau pour réaliser un substrat ;
f) graver un motif dans chacune des plaquettes du substrat et, par superposition desdits motifs, former un composant horloger monobloc comportant une première épaisseur à base de verre photostructurable et au moins une deuxième épaisseur dudit au moins un deuxième matériau ;
g) libérer du substrat le composant horloger monobloc.

Enfin, quel que soit le mode de réalisation, plusieurs composants horlogers sont réalisés sur le même substrat afin de les fabriquer en série.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 à 4 sont des représentations en perspective de composants horlogers selon la présente invention ;
- les figures 5 à 7 sont des vues d'étapes d'un procédé de fabrication d'un composant horloger selon l'invention.

### Description détaillée des modes de réalisation préférés

Comme expliqué ci-dessus, l'invention se rapporte à un composant formé à l'aide d'une première pièce à base de verre photostructurable avec une deuxième pièce comportant le même type de matériau ou un autre type de matériau, c'est-à-dire à base de silicium, de métal ou de céramique.

Ce composant a été imaginé pour des applications dans le domaine horloger et est rendu nécessaire par la limitation de structuration des matériaux fragiles comme ceux à base de silicium ou de céramique. On peut, à titre d'exemple, envisager de former le spiral, le balancier, l'ancre, les ponts, la masse oscillante ou même les mobiles comme les roues d'échappement totalement ou partiellement à base de matériaux fragiles.

C'est pourquoi, l'invention se rapporte à un composant horloger comportant une première pièce à base de verre photostructurable, au moins une deuxième pièce à base d'au moins un deuxième matériau caractérisé en ce qu'une surface de la première pièce est solidarisée sur une surface de la deuxième pièce afin de former un composant horloger monobloc.

Avantageusement selon l'invention, on comprend que la première pièce pourra avoir une plus grande possibilité de forme tout en gardant une deuxième pièce utilisant les avantages de son matériau. De plus, il existe une grande variété de processus de solidarisation possible d'un verre photostructurable. De fait, il n'est pas obligatoire d'apporter de la matière pour solidariser les deux pièces comme pour le collage ou l'utilisation d'une partie intermédiaire. Ainsi, à titre d'exemple, deux surfaces de formes correspondantes est suffisant pour solidariser la première pièce avec la deuxième pièce.

Comme expliqué ci-dessus, le composant horloger monobloc peut être formé totalement ou partiellement à base de verre photostructurable. Ainsi, ledit au moins un deuxième matériau peut être à base de silicium, de métal ou de céramique. De plus, ledit au moins un deuxième matériau peut également comporter, de manière optionnelle, un matériau intermédiaire destiné à favoriser la solidarisation entre deux matériaux difficiles à attacher. Ainsi, suivant la technique de solidarisation choisie, ce matériau intermédiaire peut être assimilé à une brasure destinée à attacher deux matériaux par adhérence conjointe sur le matériau intermédiaire, ou, inversement, former une couche destinée à induire un échauffement suffisamment intense pour générer la fusion des deux matériaux.

Lorsque ledit au moins un deuxième matériau est à base de silicium, il peut comporter du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

Lorsque ledit au moins un deuxième matériau est à base de céramique, il peut comporter du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

Lorsque ledit au moins un deuxième matériau est à base de métal, il peut comporter un alliage de fer comme de l'acier 15P, 20AP ou 316L, un alliage de cuivre comme du laiton, un alliage de nickel comme du maillechort, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

En outre, ledit au moins un deuxième matériau même à base de silicium, de métal ou de céramique, peut également comporter au moins un revêtement partiel d'oxyde de silicium, de nitrure de silicium, de carbure de silicium ou d'un allotrope du carbone.

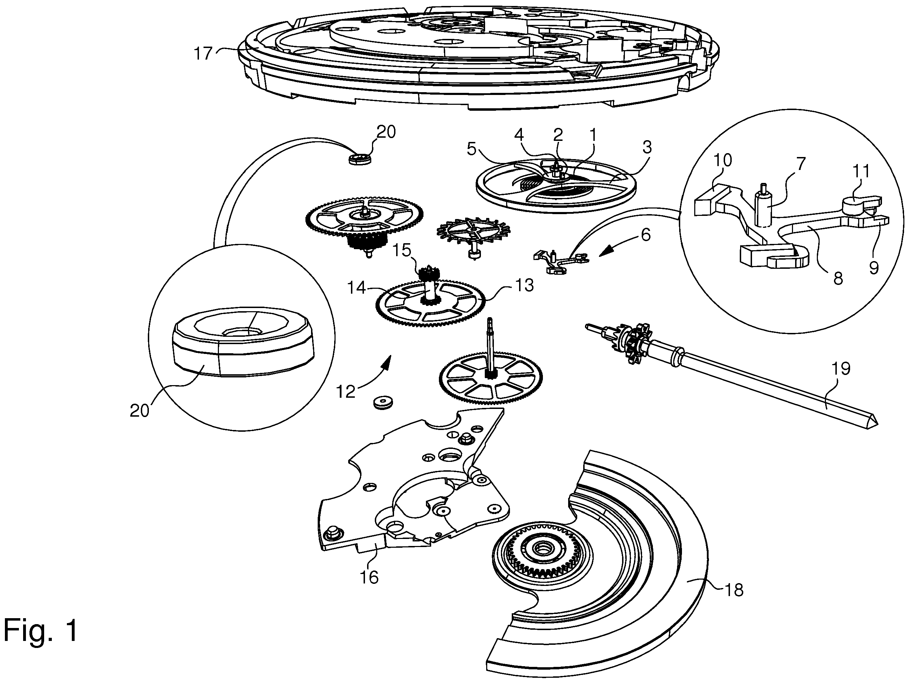

Avantageusement selon l'invention, la première pièce et/ou la deuxième pièce peuvent former une grande variété de composants horlogers pour une pièce d'horlogerie. A titre d'exemples nullement limitatifs et en relation avec la figure 1, la première pièce et/ou la deuxième pièce peuvent ainsi former notamment un spiral 1, une cheville 2, un balancier 3, un axe 4, un plateau 5, une ancre 6 comme une tige 7, une baguette 8, une fourchette 9, une palette 10 et un dard 11, un mobile 12 comme une roue 13, un arbre 14 et un pignon 15, un pont 16, une platine 17, une masse oscillante 18, une tige de remontoir 19 ou un coussinet 20.

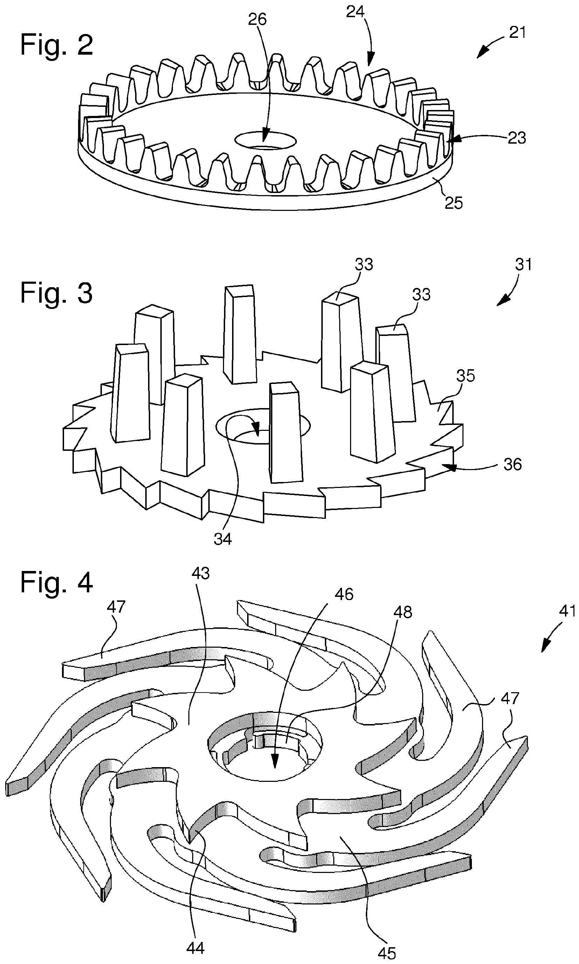

A titre d'exemple, la figure 2 présente un composant horloger formant un mobile 21. Le mobile 21 comporte une première pièce 23 à base de verre photostructurable formant une denture de chant 24 solidarisée sur une deuxième pièce annulaire 25 à base de silicium, de métal ou de céramique comportant un trou 26.

La figure 3 présente un autre exemple de composant horloger formant une roue à colonne 31. La roue à colonne 31 comporte plusieurs premières pièces 33 à base de verre photostructurable formant les colonnes asymétriques solidarisées sur une deuxième pièce annulaire 35 à base de silicium, de métal ou de céramique comportant un trou 34 central et une denture 36 périphérique.

La figure 4 présente un dernier exemple de composant horloger formant une roue double 41. La roue double 41 comporte une première pièce 43 à base de verre photostructurable formant une denture 44 solidarisées sur une deuxième pièce annulaire 45 à base de silicium, de métal ou de céramique comportant un trou central 46 muni de moyens élastiques 48 et de bras 47 formant une denture périphérique.

Comme expliqué ci-dessus, la première pièce et/ou la deuxième pièce peuvent former une variété de composants horlogers. A titre d'exemples additionnels aux figures 2 à 4, une ancre 6 pourrait être formée à partir d'une première pièce à base de verre photostructurable formant la baguette 8, les palettes 10 et la fourchette 9 et d'une deuxième pièce formant la tige et/ou le dard 11.

De plus, une première pièce à base de verre photostructurable pourrait former un plateau 5 et être solidaire d'une deuxième pièce formant une cheville 2, une première pièce à base de verre photostructurable pourrait former une platine 17 ou un pont 16 et être solidaire de plusieurs deuxièmes pièces formant des coussinets 20 ou une première pièce à base de verre photostructurable pourrait former une masse oscillante 18 et être solidaire d'une deuxième pièce formant une masse additionnelle sur la partie périphérique.

Selon un premier mode de réalisation préféré, l'invention se rapporte à un procédé de fabrication comportant une première étape a) destinée à se munir d'une première plaquette 51 à base de verre photostructurable comportant un premier motif 53 gravé. De tels verres sont, par exemple, disponibles chez Schott A.G. sous la référence Foturan®, chez Hoya Corp. sous la référence PEG3® ou chez LifeBioScience Inc. sous la référence Apex™.

Avantageusement selon l'invention, la photostructuration d'un verre photostructurable autorise une plus grande variété de forme qu'avec des gravages de matériaux à base de silicium ou de céramique. Le processus de photostructuration consiste dans une première phase en une illumination à une longueur d'onde correspondant au verre photostructurable à travers d'un masque partiellement opaque à ladite longueur d'onde. Suivant la quantité, l'orientation et la distribution de l'illumination, des zones dans la plaquette de verre photostructurable sont structurés.

On comprend ainsi qu'en utilisant un masque avec des zones variables d'opacité et/ou une source avec une focalisation contrôlable, il est possible de créer des formes comme la denture de chant 24 ou la colonne asymétrique 33 citées ci-dessus. La source d'illumination peut par exemple être une lampe UV dont le pic de distribution spectrale est situé à une longueur d'onde comprise entre 200 et 400 nm.

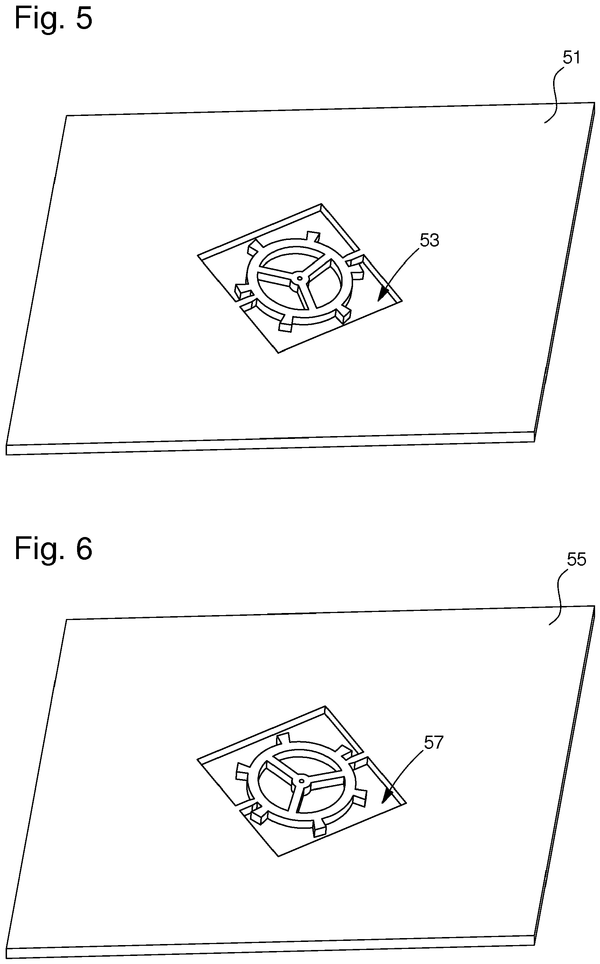

Une deuxième phase consiste à soumettre la plaquette de verre photostructurable à un traitement thermique. La température de chauffage varie suivant le verre photostructurable et peut atteindre l'ordre de 600°C. Ce traitement thermique permet de rendre les zones illuminées plus sélectives pour la dernière phase d'élimination par une attaque chimique. Cette attaque chimique peut être effectuée, par exemple, dans un bain d'acide fluorhydrique à environ 10%, à température ambiante et sous ultrasons. On obtient alors une plaquette 51 comme illustrée à la figure 5.

Une deuxième étape b) est destinée à se munir d'au moins une deuxième plaquette 55 en au moins un deuxième matériau comportant au moins un deuxième motif 57 gravé. A titre nullement limitatif, on peut citer un gravage sec comme un gravage ionique réactif profond (DRIE), un gravage laser ou un gravage par plasma. Il est également parfaitement envisageable de recourir à un gravage humide comme un gravage chimique ou même une nouvelle photostructuration comme expliqué ci-dessus. Enfin, une photostructuration mêlant une photolithographie d'une résine suivie d'un gravage sec ou humide peut également être réalisée.

Une troisième étape c) est destinée à solidariser la première plaquette 51 à ladite au moins une deuxième plaquette 55 pour réaliser un substrat et, par superposition desdits motifs 53, 55, former un composant horloger monobloc comportant une première épaisseur à base de verre photostructurable et au moins une deuxième épaisseur dudit au moins un deuxième matériau à base de silicium, de métal ou de céramique.

Suivant les matériaux utilisés, plusieurs solidarisations sont possibles. A titre nullement limitatif, on peut citer le soudage direct des surfaces par rayonnement électromagnétique au moyen d'un laser comme, par exemple, expliqué dans le document EP 1 436 830 incorporé par référence dans la présente description. Il est également parfaitement envisageable de recourir à une solidarisation par champ électrique (anodic bonding), une solidarisation par fusion (fusion bonding), une solidarisation par thermocompression (thermocompression bonding), une solidarisation par refusion (reflow bonding), une solidarisation eutectique (eutectic bonding), une solidarisation par ondes vibratoires (ultrasonic bonding) ou une solidarisation combinant chauffage, ondes vibratoires et compression (thermosonic bonding).

Enfin, le procédé comporte une étape finale d) destinée à libérer du substrat le composant horloger monobloc. Avantageusement selon l'invention, une grande variété de matériaux peut donc être utilisée pour former des composants horlogers de manière industrielle. Comme illustré à la figure 4, on peut par exemple obtenir le mobile 41 comportant une première épaisseur 43 à base de verre photostructurable et au moins une deuxième épaisseur 45 dudit au moins deuxième matériau.

Selon une alternative du premier mode de réalisation, l'étape b) peut consister à former plusieurs deuxièmes plaquettes formées à partir du même matériau ou de plusieurs matériaux différents. Dans cette alternative du premier mode de réalisation, on comprend donc qu'on peut obtenir lors de l'étape c) un substrat avec trois plaquettes solidarisées permettant alors de former un composant horloger comportant une première épaisseur à base de verre photostructurable et au moins deux deuxièmes épaisseurs formées à partir du même matériau ou de plusieurs matériaux différents.

Selon un deuxième mode de réalisation, l'invention se rapporte à un procédé de fabrication comportant une première étape e) destinée à solidariser une première plaquette à base de verre photostructurable à au moins une deuxième plaquette en au moins un deuxième matériau pour réaliser un substrat à l'aide des mêmes méthodes décrites dans l'étape c) du premier mode de réalisation.

Le deuxième mode de réalisation se poursuit avec l'étape f) destinée à graver un motif dans chacune des plaquettes du substrat et, par superposition desdits motifs, former un composant horloger monobloc comportant une première épaisseur à base de verre photostructurable et au moins une deuxième épaisseur dudit au moins un deuxième matériau à l'aide des mêmes méthodes décrites des étapes a) et b) du premier mode de réalisation.

Enfin, le procédé comporte une étape finale g) destinée à libérer du substrat le composant horloger monobloc. Avantageusement selon l'invention, une grande variété de matériaux peut donc être utilisée pour former des composants horlogers de manière industrielle. Comme illustré à la figure 4, on peut par exemple obtenir le mobile 41 comportant une première épaisseur 43 à base de verre photostructurable et au moins une deuxième épaisseur 45 dudit au moins deuxième matériau.

Selon une alternative du deuxième mode de réalisation similaire à celle du premier mode de réalisation, l'étape e) peut également consister à réaliser un substrat à l'aide de plusieurs deuxièmes plaquettes formées à partir du même matériau ou de plusieurs matériaux différents. Dans cette alternative du deuxième mode de réalisation, on comprend donc qu'on peut obtenir un substrat avec trois plaquettes solidarisées permettant alors de former un composant horloger comportant une première épaisseur à base de verre photostructurable et au moins deux deuxièmes épaisseurs formées à partir du même matériau ou de plusieurs matériaux différents.

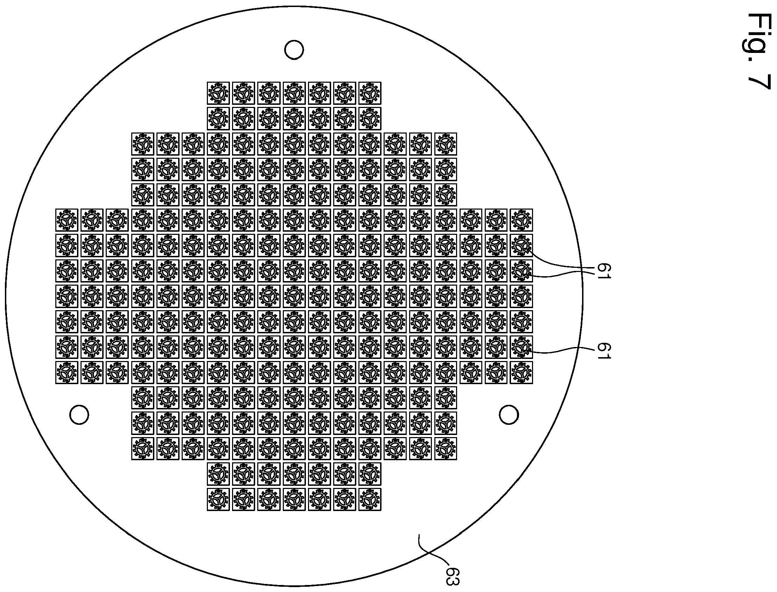

Bien entendu, quel que soit le mode de réalisation, le procédé peut permettre de fabriquer plusieurs composants horlogers 61 sur le même substrat 63 comme illustré à la figure 7.

La présente invention ne se limite pas à l'exemple illustré mais est susceptible de diverses variantes et modifications qui apparaîtront à l'homme de l'art. En particulier, si un même motif est désiré pour chaque pièce, une solidarisation des plaquettes peut être effectuée puis un unique gravage peut être prévu.

De même, comme pour l'exemple des multiples colonnes 33 de la roue à colonnes 31, le procédé utilisant des plaquettes est préféré, c'est-à-dire que toutes les colonnes 33 sont structurées dans la même plaquette de verre photostructurable et solidarisées à une autre plaquette. Toutefois, rien n'empêche de détacher une à une les colonnes 33 pour les solidariser au fur et à mesure sur une autre pièce finie telle qu'une roue dentée 35.

## Revendications

1. Composant horloger (21, 31, 41, 61) comportant une première pièce (1, 2, 3, 4, 5, 6, 7, 8, 9, 10, 11, 12, 13, 14, 15, 16, 17, 18, 19, 20, 23, 25, 27, 33, 35, 43, 45) à base de verre photostructurable, au moins une deuxième pièce (1, 2, 3, 4, 5, 6, 7, 8, 9, 10, 11, 12, 13, 14, 15, 16, 17, 18, 19, 20, 23, 25, 27, 33, 35, 43, 45) à base d'au moins un deuxième matériau **caractérisé en ce qu'**une surface (24, 28, 30, 31) de la première pièce est solidarisée sur une surface de la deuxième pièce afin de former un composant horloger (21, 31, 41, 61) monobloc.

2. Composant horloger (21, 31, 41, 61) selon la revendication précédente, **caractérisé en ce que** ledit au moins un deuxième matériau est à base de silicium et comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

3. Composant horloger (21, 31, 41, 61) selon la revendication 1, **caractérisé en ce que** ledit au moins un deuxième matériau est à base de céramique et comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

4. Composant horloger (21, 31, 41, 61) selon la revendication 1, **caractérisé en ce que** ledit au moins un deuxième matériau est à base de métal et comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

5. Composant horloger (21, 31, 41, 61) selon l'une des revendications précédentes, **caractérisé en ce que** ledit au moins un deuxième matériau comporte en outre au moins un revêtement partiel d'oxyde de silicium, de nitrure de silicium, de carbure de silicium ou d'un allotrope du carbone.

6. Composant horloger (21, 31, 41, 61) selon l'une des revendications précédentes, **caractérisé en ce que** la première pièce et/ou la deuxième pièce forme est un spiral (1), une cheville (2), un balancier (3), un axe (4), un plateau (5), une ancre (6), une tige (7), une baguette (8), une fourchette (9), une palette (10), un dard (11), un mobile (12), une roue (13), un arbre (14), un pignon (15), un pont (16), une platine (17), une masse oscillante (18), une tige de remontoir (19), un palier, un coussinet (20), une denture de chant (24) ou une colonne (33).

7. Pièce d'horlogerie **caractérisée en ce qu'**elle comporte un composant horloger (21, 31, 41, 61) selon l'une des revendications précédentes.

8. Procédé de fabrication d'un composant horloger (21, 31, 41, 61) monobloc comportant les étapes suivantes :
a) se munir d'une première plaquette (51) à base de verre photostructurable comportant un premier motif (53) gravé ;
b) se munir d'au moins une deuxième plaquette (55) en au moins un deuxième matériau comportant au moins un deuxième motif (57) gravé ;
c) solidariser la première plaquette (51) à ladite au moins une deuxième plaquette (55) pour réaliser un substrat (63) et, par superposition desdits motifs (53, 57), former un composant horloger (21, 31, 41, 61) monobloc comportant une première épaisseur à base de verre photostructurable et au moins une deuxième épaisseur dudit au moins un deuxième matériau ;
d) libérer du substrat (63) le composant horloger (21, 31, 41, 61) monobloc.

9. Procédé de fabrication d'un composant horloger (21, 31, 41, 61) monobloc comportant les étapes suivantes :
e) solidariser une première plaquette (51) à base de verre photostructurable à au moins une deuxième plaquette (55) en au moins un deuxième matériau pour réaliser un substrat ;
f) graver un motif (53, 57) dans chacune des plaquettes (51, 55) du substrat (63) et, par superposition desdits motifs, former un composant horloger (21, 31, 41, 61) monobloc comportant une première épaisseur à base de verre photostructurable et au moins une deuxième épaisseur dudit au moins un deuxième matériau ;
g) libérer du substrat (63) le composant horloger (21, 31, 41, 61) monobloc.

10. Procédé de fabrication selon la revendication 8 ou 9,
**caractérisé en ce que** plusieurs composants horlogers (21, 31, 41, 61) sont réalisés sur le même substrat (63).

## Patentansprüche

1. Uhrenkomponente (21, 31, 41, 61), die ein erstes Teil (1, 2, 3, 4, 5, 6, 7, 8, 9, 10, 11, 12, 13, 14, 15, 16, 17, 18, 19, 20, 23, 25, 27, 33, 35, 43, 45) auf der Basis eines photostrukturierbaren Glases und mindestens ein zweites Teil (1, 2, 3, 4, 5, 6, 7, 8, 9, 10, 11, 12, 13, 14, 15, 16, 17, 18, 19, 20, 23, 25, 27, 33, 35, 43, 45) auf der Basis mindestens eines zweiten Materials umfasst, **dadurch gekennzeichnet, dass** eine Oberfläche (24, 28, 30, 31) des ersten Teils mit einer Oberfläche des zweiten Teils fest verbunden ist, um eine Monoblock-Uhrenkomponente (21, 31, 41, 61) zu bilden.

2. Uhrenkomponente (21, 31, 41, 61) nach dem vorhergehenden Anspruch, **dadurch gekennzeichnet, dass** das mindestens eine zweite Material ein Material auf Siliciumbasis ist und monokristallines Silicium, dotiertes monokristallines Silicium, polykristallines Silicium, dotiertes polykristallines Silicium, poröses Silicium, Siliciumoxid, Quarz, Siliciumdioxid, Siliciumnitrid oder Siliciumcarbid enthält.

3. Uhrenkomponente (21, 31, 41, 61) nach Anspruch 1, **dadurch gekennzeichnet, dass** das mindestens eine zweite Material ein Material auf Keramikbasis ist und photostrukturierbares Glas, Borosilikat, Aluminosilikat, Quarzglas, Zerodur, monokristallinen Korund, polykristallinen Korund, Tonerde, Aluminiumoxid, Aluminiumnitrid, monokristallinen Rubin, polykristallinen Rubin, Zirkonoxid, Titanoxid, Titannitrid, Titancarbid, Wolframnitrid, Wolframcarbid, Bornitrid oder Borcarbid enthält.

4. Uhrenkomponente (21, 31, 41, 61) nach Anspruch 1, **dadurch gekennzeichnet, dass** das mindestens eine zweite Material ein Material auf Metallbasis ist und eine Eisenlegierung, eine Kupferlegierung, Nickel oder eine seiner Legierungen, Titan oder eine seine Legierungen, Gold oder eine seine Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

5. Uhrenkomponente (21, 31, 41, 61) nach einem der vorhergehenden Ansprüche, **dadurch gekennzeichnet, dass** das mindestens eine zweite Material außerdem zumindest eine Teilbeschichtung aus Siliciumoxid, Siliciumnitrid, Siliciumcarbid oder einem Kohlenstoffallotrop enthält.

6. Uhrenkomponente (21, 31, 41, 61) nach einem der vorhergehenden Ansprüche, **dadurch gekennzeichnet, dass** das erste Teil und/oder das zweite Teil eine Spiralfeder (1), einen Hebelstein (2), eine Unruh (3), eine Welle (4), eine Hebelscheibe (5), einen Anker (6), einen Stift (7), eine Stange (8), eine Gabel (9), eine Palette (10), einen Sicherheitsstift (11), ein Drehteil (12), ein Rad (13), eine Welle (14), ein Ritzel (15), eine Brücke (16), eine Platine (17), eine oszillierende Masse (18), eine Aufzugwelle (19), ein Lager, eine Lagerhülse (20), eine Seitenzahnung (24) oder eine Säule (33) bilden.

7. Zeitmessgerät, **dadurch gekennzeichnet, dass** es eine Uhrenkomponente (21, 31, 41, 61) nach einem der vorhergehenden Ansprüche umfasst.

8. Verfahren zum Herstellen einer Monoblock-Uhrenkomponente (21, 31, 41, 61), das die folgenden Schritte umfasst:
a) Bereitstellen eines ersten Plättchens (51) auf der Basis eines photostrukturierbaren Glases, das ein erstes graviertes Muster (53) aufweist;
b) Bereitstellen mindestens eines zweiten Plättchens (55) aus mindestens einem zweiten Material, das mindestens ein zweites graviertes Muster (57) aufweist;
c) Verbinden des ersten Plättchens (51) mit dem mindestens einen zweiten Plättchen (55), um ein Substrat (63) auszubilden, und, durch Überlagern der Muster (53, 57), Bilden einer Monoblock-Uhrenkomponente (21, 31, 41, 61), die eine erste Schichtdicke auf der Basis eines photostrukturierbaren Glases und mindestens eine zweite Schichtdicke aus dem mindestens einen zweiten Material besitzt;
d) Lösen der Monoblock-Uhrenkomponente (21, 31, 41, 61) von dem Substrat (63).

9. Verfahren zum Herstellen einer Monoblock-Uhrenkomponente (21, 31, 41, 61), das die folgenden Schritte umfasst:
e) Verbinden eines ersten Plättchens (51) auf der Basis eines photostrukturierbaren Glases mit mindestens einem zweiten Plättchen (55) aus mindestens einem zweiten Material, um ein Substrat auszubilden;
f) Gravieren eines Musters (53, 57) in jedes der Plättchen (51, 55) des Substrats (63) und, durch Überlagern der Muster, Bilden einer Monoblock-Uhrenkomponente (21, 31, 41, 61), die eine erste Schichtdicke auf der Basis eines photostrukturierbaren Glases und mindestens eine zweite Schichtdicke aus dem mindestens einen zweiten Material besitzt;
g) Lösen der Monoblock-Uhrenkomponente (21, 31, 41, 61) von dem Substrat (63).

10. Herstellungsverfahren nach Anspruch 8 oder 9, **dadurch gekennzeichnet, dass** auf demselben Substrat (63) mehrere Uhrenkomponenten (21, 31, 41, 61) ausgebildet werden.

## Claims

1. Timepiece component (21, 31, 41, 61) including a first part (1, 2, 3, 4, 5, 6, 7, 8, 9, 10, 11, 12, 13, 14, 15, 16, 17, 18, 19, 20, 23, 25, 27, 33, 35, 43, 45) based on photostructurable glass, at least a second part (1, 2, 3, 4, 5, 6, 7, 8, 9, 10, 11, 12, 13, 14, 15, 16, 17, 18, 19, 20, 23, 25, 27, 33, 35, 43, 45) based on at least one second material, **characterized in that** one surface (24, 28, 30, 31) of the first part is made integral with a surface of the second part so as to form a one-piece timepiece component (21, 31, 41,61).

2. Timepiece component (21, 31, 41, 61) according to claim 1, **characterized in that** the at least one second material is silicon-based and includes single crystal silicon, doped single crystal silicon, polycrystalline silicon, doped polycrystalline silicon, porous silicon, silicon oxide, quartz, silica, silicon nitride or silicon carbide.

3. Timepiece component (21, 31, 41, 61) according to claim 1,
**characterized in that** the at least one second material is ceramic-based and includes photostructurable glass, borosilicate, aluminosilicate, quartz glass, zerodur, single crystal corundum, polycrystalline corundum, alumina, aluminium oxide, aluminium nitride, single crystal ruby, polycrystalline ruby, zirconium oxide, titanium oxide, titanium nitride, titanium carbide, tungsten nitride, tungsten carbide, boron nitride or boron carbide.

4. Timepiece component (21, 31, 41, 61) according to claim 1,
**characterized in that** the at least one second material is metal-based and includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.

5. Timepiece component (21, 31, 41, 61) according to any of claims 1 to 4, **characterized in that** the at least one second material further includes at least a partial coating of silicon oxide, silicon nitride, silicon carbide or an allotrope of carbon.

6. Timepiece component (21, 31, 41, 61) according to any of claims 1 to 5, **characterized in that** the first part and/or the second part is a balance spring (1), an impulse pin (2), a balance (3), a staff (4), a roller (5), a pallets (6), a pallet-staff (7), a pallet lever (8), a fork (9), a pallet stone (10),a guard-pin (11), a wheel set (12), a wheel (13), a staff (14), a pinion (15), a bridge (16), a plate (17), an oscillating weight (18), a winding stem (19), a bearing-block, a bearing (20), a contrate toothing (24) or a column (33).

7. Timepiece **characterized in that** the timepiece includes a timepiece component (21, 31, 41, 61) according to any of claims 1 to 6.

8. Method of manufacturing a one-piece timepiece component (21, 31, 41, 61) comprising the following steps:
a) taking a first wafer (51) based on photostructurable glass including a first etched pattern (53);
b) taking at least a second wafer (55) made of at least a second material including at least a second etched pattern (57);
c) joining the first wafer (51) with the at least one second wafer (55) to form a substrate (63) and, by superposition of the patterns (53, 57), forming a one-piece timepiece component (21, 31, 41, 61) including a first thickness based on photostructurable glass and at least one second thickness of the at least one second material;
d) releasing the one-piece timepiece component (21, 31, 41, 61) from the substrate (63).

9. Method of manufacturing a one-piece timepiece component (21, 31, 41, 61) comprising the following steps:
e) joining a first wafer (51) based on photostructurable glass with at least a second wafer (55) made of at least a second material to form a substrate;
f) etching a pattern (53, 57) in each of the wafers (51, 55) of the substrate (63) and, by superposition of the patterns, forming a one-piece timepiece component (21, 31, 41, 61) including a first thickness based on photostructurable glass and at least one second thickness of the at least one second material;
g) releasing the one-piece timepiece component (21, 31, 41, 61) from the substrate (63).

10. Manufacturing method according to claim 8 or 9, **characterized in that** several timepiece components (21, 31, 41, 61) are formed on the same substrate (63).
